(19) Europäisches Patentamt
European Patent Office
Office européen des brevets

(11) EP 0 513 216 B1

(12) EUROPEAN PATENT SPECIFICATION

(45) Date of publication and mention of the grant of the patent: **22.10.1997 Bulletin 1997/43**

(21) Application number: **91904590.6**

(22) Date of filing: **07.02.1991**

(51) Int Cl.[6]: **C08F 297/08**, C08F 4/64

(86) International application number: **PCT/US91/00835**

(87) International publication number: **WO 91/12285 (22.08.1991 Gazette 1991/19)**

# (54) BLOCK COPOLYMERS FROM IONIC CATALYSTS

BLOCKCOPOLYMERE VON IONISCHEN KATALYSATOREN

COPOLYMERES EN BLOCS OBTENUS A PARTIR DE CATALYSEURS IONIQUES

(84) Designated Contracting States: **BE DE ES FR GB IT NL SE**

(30) Priority: **09.02.1990 US 477791**

(43) Date of publication of application: **19.11.1992 Bulletin 1992/47**

(73) Proprietor: **EXXON CHEMICAL PATENTS INC.**
**Linden, New Jersey 07036-0710 (US)**

(72) Inventors:
- **TURNER, Howard, William**
  **Webster, TX 77598 (US)**
- **HLATKY, Gregory, George**
  **Houston, TX 77062 (US)**

(74) Representative:
**Veldhuizen, Albert Dirk Willem et al**
**Exxon Chemical Limited**
**European Patents and Licences**
**Exxon Chemical Technology Centre**
**P.O. Box 1**
**Abingdon Oxfordshire OX13 6BB (GB)**

(56) References cited:
**EP-A- 0 277 003**
**EP-A- 0 277 004**
**DE-A- 3 640 924**
**DE-A- 3 826 075**
**JP-A-63 063 712**
**US-A- 4 408 019**
**US-A- 4 522 982**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 513 216 B1

## Description

### FIELD OF THE INVENTION

This invention relates to a method for preparing block copolymers by polymerizing ethylene and other olefins in the presence of a catalyst which is a reaction product of a metallocene component with second component which comprises a cation capable of irreversibly reacting with a ligand of the metallocene and a compatible non-coordinating anion. More particularly, this invention relates to a process for the production of multiblock copolymers of ethylenically unsaturated monomers.

### BACKGROUND OF THE INVENTION

Block copolymers are well known. They have been used commercially as components in adhesives, as melt processable rubbers, impact resistant thermoplastics, and as compatibilizers, or "surfactants", for emulsifying polymer-polymer blends.

There has been widespread interest in polymer blends and alloys. Unfortunately, most homopolymer pairs are immiscible with one another and give rise to low strength materials due to the lack of interfacial adhesion between the separate phases. A block copolymer is created when two or more polymeric segments, or blocks, of different chemical composition are covalently bonded in an end-to-end fashion. Block copolymers have certain advantages over blends. Firstly, the segments are covalently bonded to each other, thereby eliminating the interface problem. Secondly, block copolymers can be used to strengthen blends of immiscible polymers by serving as "emulsifiers," which encourage physical connections between the phase, and thus improve the interfacial adhesion and load transferring capability of the components.

While a wide variety of block copolymer architectures are possible, most block copolymers of interest involve the covalent bonding of hard plastic segments which are crystalline or glassy, to elastomeric blocks forming thermoplastic elastomers. Other block copolymers, such as rubber-rubber, glass-glass, and glass-crystalline block copolymers are also possible and may have commercial importance. Two common types of block copolymer structures are the diblock and triblock forms. However, multiblock copolymers, in which more than three segments are bonded together, are also desirable.

Triblock and multiblock copolymers have the unique ability of behaving as thermoplastic elastomers, combining thermoplasticity with rubber-like behavior. The key requirements for achieving thermoplastic elastomeric behavior is the ability to develop a two-phase physical network. Such a system is composed of a minor fraction of hard block, having a glass transition temperature (Tg) or melting temperature (Tm) above room temperature, and a major fraction of a soft block, having a Tg below room temperature. The hard blocks associate to form small morphological domains that serve as physical crosslinking and reinforcement sites. These states are thermally reversible making it possible to process the polymer as a melt at temperatures above the Tg or Tm of the hard block.

Block copolymers are similar to, yet distinct from, tapered polymers. In a tapered copolymer the composition of comonomer is gradually varied from one end of the polymer to the other. Tapered copolymers are commercially used as viscosity modifiers, oil additives, thermoplastic elastomers, and impact-resistant plastics.

Much work has been done in an attempt to synthesize olefinic block copolymers. The ideal catalyst system would produce a "living polymer." Unlike typical Ziegler-Natta polymerization processes living polymerization processes involve only initiation and propagation steps and are essentially devoid of terminating side reactions. This permits the synthesis of the predetermined and well-controlled structures required for effective block copolymerization. A polymer created in a "living" system can have an extremely narrow distribution of molecular weight and be essentially monodisperse. The living polymer technique is uniquely suited for the preparation of block copolymers. Living catalyst systems are characterized by an initiation rate which is considerably higher than the propagation rate, and the absence of termination or transfer reactions. In addition, these systems are characterized by the presence of a single type of active site.

Anionic polymerization routes to ideal olefinic block copolymers have been much studied. Butadiene-isoprene block copolymers have been synthesized using the sequential addition technique. In sequential addition, a certain amount of one of the monomers is contacted with the catalyst. Once the monomer has reacted to extinction, forming the first block, a certain amount of the second monomer species is introduced and allowed to react to form the second block. The process may be repeated as desired using the same or other anionically polymerizable monomers.

Ethylene and other alpha-olefins such as propylene and butene are not directly block polymerizable by anionic techniques. Another technique is described by Falk and Schlott in Macromolecules, 1971 4, 152. The first step in the procedure involves preparing block polymers containing polybutadiene and polyisoprene using anionic techniques. The low pressure catalytic hydrogenation of the block polymer obtains the saturated block polymer.

The anionic routes to ideal olefinic block copolymers provide a clean route to model block copolymers. However,

the method is impractical and is not sufficiently versatile for commercial purposes. for example, the anionic route cannot be used to synthesize HDPE or isotactic polypropylene (i-PP) segments.

A coordination technique which has been used to synthesize block copolymers involves the use of vanadium catalysts at low temperatures. Dol et. al., in Macromolecules, 1986, 19, 2896, showed that a catalyst prepared from tris(2-methyl-1,3-butanedionato)vanadium and $Al(C_2H_5)_2Cl$ in toluene has high reactivity in the living coordination polymerization of propene and that a well-defined diblock copolymer of polypropylene and ethylene-propylene rubber can be prepared by adding ethylene monomer during the living polymerization of propene.

While the Dol technique has the advantage over the anionic routes of dispensing with the hydrogenation step, it does require very low temperatures. The block copolymerizations carried out by Dol et. al. were performed at -70° and -60°C. Dol also reported, in W. Kaminsky and H. Slnn (Eds.), Transition Metals and 0rganometallic as Catalysts for Olefin Polymerization, Springer-Verlag 1988, the living copolymerization, at -78 C, of propylene with 1,5-hexadiene. An additional disadvantage of the technique is that it cannot be used to produce i-PP. Furthermore, and no reports of the production of high density polyethylene (HDPE) via this method have appeared in the literature. The catalyst itself is poorly characterized and unstable.

Many claims in the prior art have been made for the production of block polymers in the presence of Ziegler-Natta type catalysts. for example, JP-A-63-63712 to Mitsubishi Petrochemicals claims a method of producing a propylene block copolymer using a catalyst including a solid titanium component containing magnesium, titanium, halogen and an electron-donor with an organo-aluminum cocatalyst to prepare homopolypropylene in a first stage reaction, following which in a second stage of reaction bis(cyclopentadienyl) titanium dichloride is added and polymerization is continued in the presence of added ethylene. The propylene block copolymers produced are said to have high rigidity and impact strength and good molding properties.

U.S. Patent 4,408,019 to Blunt relates to the use of a catalyst-activator system wherein titanium is the sole metal component to produce block copolymers of ethylene and propylene. The block copolymers have the general formula $(AB)_nA$ wherein A is a crystalline polypropylene block, each B is a random ethylene-propylene copolymer block, and n is an integer from 1 to about 12. The catalyst-activator is described as a combination of titanium trichloride as the catalyst and dimethylbis(methylcyclopentadienyl)titanium as an activator. The amount of ethylene in the block polymer is typically 40-65 wt.% with 5-15 wt.% present in the ethylene-propylene segments. The thermoplastic block polymers are said to have superior tensile strength and lower compression set than prior art block polymers. In discussing prior art catalysts, Blunt observes that the production of a true block polymer is dependent upon there being no permanent interruption in the growth of any given polymer chain until all of the blocks have been completed. Moreover, Blunt states that the traditional Ziegler-Natta catalysts based on titanium halides in conjunction with alkylaluminum compounds do not provide a sufficiently long chain lifetime to permit the formation of block copolymers of more than two copolymer blocks.

While many patents and publications claim the synthesis of block copolymers from ethylene and propylene, there is no evidence that these products were obtained as well defined block polymers. The known kinetic features of heterogeneous Ziegler-Natta catalysts suggest that it is unlikely that block polymers were synthesized in high concentrations. (J. Boor, Ziegler-Natta Catalysts and Polymerizations, Academic Press 1979). According to Boor, the reported propylene and ethylene block copolymers are most likely mixtures of largely isotactic polypropylene, polyethylene, and either random, block, or tapered copolymers which are present in low concentrations, in the range of 0 to 20%.

As reasons for his conclusion, Boor lists a large number of inherent barriers which must be overcome in using known Ziegler-Natta catalysts to synthesize block copolymers. For example, to synthesize ethylene/$\alpha$-olefins block copolymers the following conditions must be satisfied: 1) all of the Ti centers must become active, simultaneously; 2) all the Ti center must stay alive during the polymerization; 3) all the Ti centers must have equal activities for polymerizing propylene and ethylene; 4) all the Ti centers must be equally accessible to the available olefin molecules; 5) the crossover propagation rates must be high for Ti-propylene centers to be efficiently converted into Ti polyethylene centers; 6) the centers must be isotactic-specific for propylene polymerization and polymerize all ethylene molecules to a linear polymer.

Several difficulties arise in the use of known catalysts for the block copolymerization of olefins. Among those are the fact that conventional catalysts are typically multisited, and a significant fraction of the active sites are unstable. This leads to random chain initiation and termination which, in turn, lowers the theoretical block copolymer yield. What is desired, and what practice of this invention provides, is a catalyst system with well-characterized structure and reactivity which has a single active site. The system should have well-defined and stable polymerization kinetics and be free of aluminum alkyls or other chain transfer agents.

## SUMMARY OF THE INVENTION

The invention provides a process for the production of a block copolymer comprising:

(1) contacting at least one first olefinic monomer with a catalyst comprising:

(a) a Group IVB metallocene cation with a formal coordination number of 3 and a valence of +4 and
(b) a non-coordinating anion which is bulky, capable of stabilising the cation or a decomposition product and sufficiently labile to permit displacement by an olefin, diolefin or acetylenically unsaturated monomers to produce a first living polymer
(2) sequentially adding to said living polymer at least one second monomer to copolymerize with said first polymer to produce a multiblock polymer; and
(3) recovering the block copolymer.

The process suitably includes sequentially contacting ethylene with an α-olefin monomer in a suitable solvent at 0°C in the presence of the ionic catalyst to produce a block copolymer. Thus, for example, when a PP-HDPE diblock is produced, the process provides a diblock copolymer yield of 40-70%. The molecular weight of the block copolyer may he controlled by varying the catalyst-to-monomer ratio. The ionic catalyst which is a critical component of the inventive polymerization process is described in EP-A-277003 and EP-A-277004 and comprises the reaction product of a first component which is a bis(cyclopentadienyl) derivative of a metal of Group IV-B of the Periodic Table of the Elements, which metal is capable of forming a cation formally having a coordination number of 3 and a valence of +4; and at least one second component comprising a cation which will irreversibly react with at least one ligand contained in said Group IV-B metal compound and a compatible non-coordinating anion which anion is bulky and labile, and capable of stabilizing the Group IV-B metal cation without interfering with the ability of said Group IV-B metal cation, or its decomposition product, to polymerize α-olefins to form tapered polymers and multiblock polymers such as di- and triblock homo-, and copolymers of ethylene and propylene with one or more other alpha-olefins.

## DESCRIPTION OF THE PREFERRED EMBODIMENTS

The invention provides (1) non-random di-, tri-, and multi-block copolymers of ethylene, 1-olefins, diolefins, cyclic olefins, acetylenes and other unsaturated monomers; and (2) the processes for polymerizing said non-random copolymers.

## Ionic Catalyst System - General Description

The process of this invention is practiced with that class of ionic catalysts referred to, disclosed, and described in EPA-277,003 and EPA 277,004. The ionic catalyst is prepared by combining at least two components. The first of these is a bis(cyclopentadienyl) derivative of a Group IV-B metal compound containing at least one ligand which will combine with the second component or at least one ligand which will combine with the second component or at least a portion thereof such as a cation portion thereof. The second component is an ion-exchange compound comprising a cation which will irreversibly react with at least one ligand contained in said Group IV-B metal compound and a noncoordinating anion which is bulky, labile, and stable. Upon combination of the first and second components, the cation of the second component reacts with one of the ligands of the first component, thereby generating an ion pair consisting of a Group IV-B metal cation with a formal coordination number of 3 and a valence of +4 and the aforementioneed anion, which anion is compatible with and non-coordinating towards the metal cation formed from the first component. The anion of the second compound must be capable of stabilizing the Group IV-B metal cation complex without interfering with the Group IV-B metal cation's or its composition product's ability to function as a catalyst and must be sufficiently labile to permit displacement by an olefin, diolefin or an actylenically unsaturated monomer during polymerization.

### A. Metallocene Component

The Group IV-B metal compounds; i.e., titanium, zirconium and hafnium metallocene compounds, useful as first compounds in the preparation of the improved catalyst of this invention are bis-cyclopentadienyl) derivatives of titanium, zirconium and hafnium. In general, useful titanocenes, zirconocenes and hafnocenes may be represented by the following general formulae:

1. $(A\text{-}Cp)MX_1X_2$

2. $(A\text{-}Cp)M\overline{X'_1X'_2}$

3. (A-Cp)ML

4. $(Cp^{*})Cp\overline{R)}\ MX_1$

wherein "Cp" represents a cyclopentadienyl radical which may be substituted or unsubstituted, and

(A-Cp) is either (Cp)(Cp*) or Cp-A'-Cp* and Cp and Cp* are the same or different cyclopentadienyl ring substituted with from zero to five substituent groups R.

The substituent groups R may be, independently, selected from a wide variety of classes of radical groups which form covalent bonds to the carbon atoms of the Cp-rings. These substituents act to modify the catalyst behavior by affecting the symmetry, sterics, and electronics of the transition metal center Illustrative but not limiting examples of suitable R substituents include hydrocarbyl radicals containing from 1 to 50 carbon atoms; substituted hydrocarbyl radicals wherein one or more of the hydrogen atoms is replaced by a halogen radical, an amido radical ($X_1X_2N$-), a phosphido radical ($X_1X_2P$-), an alkoxy radical ($X_10$) or any other radical containing Lewis acidic or basic functionality; hydrocarbyl substituted metalloid radicals wherein the metalloid is selected from the Group IV-A of the Periodic Table of elements; halogen radicals, amido radicals ($X_1X_2N$-), phosphido radicals ($X_1X_2P$-), alkoxy radicals ($X_10$), alkylborido radicals ($X_1X_2B$-), or any other radical containing Lewis acidic or basic functionality; or Cp and/or Cp* are a cyclopentadienyl ring in which two adjacent R groups are joined forming a $C_4$ to $C_{20}$ ring to give a saturated or unsaturated polycyclic cyclopentadienyl ligand such as indenyl, tetrahydroindenyl, fluorenyl, or octahydrofluorenyl; A' is a covalent bridging group between the two cyclopentadienyl groups; M is titanium, zirconium or hafnium; L is an olefin, diolefin or aryne ligant; $X_1$ and $X_2$ are, independently, selected from the group consisting of hydride radicals, hydrocarbyl radicals having from 1 to about 20 carbon atoms, hydrocarbyl radicals wherein one or more of the hydrogen atoms are replaced with a halogen atom, organometalloid radicals comprising a Group IV-A element wherein each of the hydrocarbyl substitutions contained in the organic portion of said organometalloid independently contain from 1 to 20 carbon atoms; $X'_1$ and $X'_2$ are joined and bound to the metal atom to form a metallacycle, in which the metal atom, $X'_1$ and $X'_2$ form a hydrocarbocyclic ring containing from 3 to 20 carbon atoms; and R is a substituent, preferably a hydrocarbyl substituent, on one of the cyclopentadienyl radicals which is also bound to the metal atom.

Illustrative, but not limiting examples of bis(cyclopentadienyl)zirconium compounds which may be used in the preparation of the improved catalyst of this invention are dihydrocarbyl-substituted bis(cyclopentadienyl)zirconium compounds such as bis(cyclopentadienyl)zirconium dimethyl, bis(cyclopentadienyl)zirconium diethyl, bis(cyclopentadienyl)zirconium dipropyl, bis(cyclopentadienyl)zirconium dibutyl, bis(cyclopentadienyl)zirconium diphenyl, bis(cyclopentadienyl)zirconium dineopentyl, bis(cyclopentadienyl)zirconium di(m-tolyl) bis(cyclopentadienyl)zirconium di(p-tolyl); (monohydrocarbyl-substituted cyclopentadienyl)zirconium compounds such as (methylcyclopentadienyl)(cyclopentadienyl) and bis(methylcyclopentadienyl)zirconium dimethyl, (ethylcyclopentadienyl) (cyclopentadienyl) and bis (ethylcyclopentadienyl)zirconium dimethyl, (propylcyclopentadienyl)(cyclopentadienyl) and bis(propylcyclopentadienyl)zirconium dimethyl, (n-butylcyclopentadienyl) (cyclopentadienyl) and bis(n-butylcyclopentadienyl)zirconium dimethyl, (t-butylcyclopentadienyl) (cyclopentadienyl) and bis(t-butylcyclopentadienyl)zirconium dimethyl, (cyclohexylmethylcyclopentadienyl) (cyclopentadienyl) and bis(cyclohexylmethylcyclopentadienyl)zirconium dimethyl, (benzylcyclopentadienyl) (cyclopentadienyl) and bis(benzylcyclopentadienyl)zirconium dimethyl, (diphenylmethylcyclopentadienyl) (cyclopentadienyl) and bis(diphenylmethylcyclopentadienyl)zirconium dimethyl, (methylcyclopentadienyl) (cyclopentadienyl) and bis(methylcytlopentadienyl)zirconium dihydride, (ethylcyclopentadienyl)(cyclopentadienyl) and bis (ethylcyclopentadienyl)zirconium dihydride, (propylcyclopentadienyl)(cyclopentadienyl) and bis(propylcyclopentadienyl)zirconium dihydride, (n-butylcyclopentadienyl)(cyclopentadienyl) and bis(n-butylcyclopentadienyl)zirconium dihydride, (t-butylcyclopentadienyl)(cyclopentadienyl) and bis(t-butylcyclopentadienyl)zirconium dihydride, (cyclohexylmethylcyclopentadienyl)(cyclopentadienyl) and bis(cyclohexylmethylcyclopentadienyl)zirconium dihydride, (benzylcyclopentadlenyl)(cyclopentadienyl) and bis(benzylcyclopentadienyl)zirconium dihydride, (diphenylmethylcyclopentadienyl)(cyclopentadienyl) and bis(diphenylmethylcyclopentadienyl)zirconium dihydride; (polyhydrocarbyl-substituted-cyclopentadienyl) zirconium compounds such as (dimethylcyclopentadienyl) (cyclopentadienyl) and bis(dimethylcyclopentadienyl) zirconium dimethyl, (trimethylcyclopentadienyl) (cyclopentadienyl) and bis(trimethylcyclopentadienyl) zirconium dimethyl, (tetramethyltyclopentadienyl) (cyclopentadienyl) and bis(tetrimethylcyclopentadienyl) zirconium dimethyl, (permethylcyclopentadienyl) (cyclopentadienyl) and bis(permethylcyclopentadienyl) zirconium dimethyl, (ethyltetramethylcyclopentadienyl) (cyclopentadienyl) and bis(ethyltetramethylcyclopentadienyl) zirconium dimethyl, (indenyl)(cyclopentadienyl) and bis(indenyl)zirconium dimethyl, (dimethylcyclopentadienyl) (cyclopentadienyl) and bis (dimethylcyclopentadienyl) zirconium dihydride, (trimethylcyclopentidienyl) (cyclopentadienyl) and bis(trimethylcyclopentadienyl) zirconium dihydride, (tetramethylcyclopentadienyl) (cyclopentadienyl) and bis(tetramethylcyclopentadienyl)zirconium dihydride, (permethylcyclopentadienyl) (cyclopentadienyl) and bis(permethylcyclopentadienyl)zirconium dihydride, (ethyltetrimethylcyclopentadienyl) (cyclopentadienyl) and bis(ethyltetramethylcyclopentadienyl)zirconium dihydride, (indenyl)(cyclopentadienyl) and bis(indenyl)zirconium (propylcyclopentadienyl) (cyclopentadienyl) and bis(propylcyclopentadienyl)zirconium dihydride, (n-butylcyclopentadienyl) (cyclopentadienyl) and bis(n-butylcyclopentadienyl)zirconium dihydride, (t-butylcyclopentadienyl) (cyclopentadienyl) and bis(t-butylcyclopentadienyl)zirconium dihydride, (cyclohexylmethylcyclopentadienyl) (cyclopentadienyl) and bis(cyclohexylmethylcyclopentadienyl)zirconium dihydride, (benzylcyclopentadienyl) (cyclopentadienyl) and bis(benzylcyclopentadienyl)zirconium dihydride, (diphenylmethylcyclopentadienyl) (cyclopentadienyl) and bis(diphenylmethylcyclopentadienyl)zirconium dihydride ; (polyhydrocarbyl-substituted-cyclopentadienyl) zirconium compounds such as (dimethylcyclopentadienyl) (cyclopentadienyl) and bis(dimethylcyclopentadienyl) zirconium dimethyl, (trimethylcyclopentadienyl) (cyclopentadienyl) and bis(trimethylcyclopentadienyl) zirconium dimethyl, (tetramethylcyclopentadienyl) (cyclopentadienyl) and bis(tetramethylcyclopentadienyl) zirconium dimethyl, (permethylcyclopentadienyl) (cyclopentadienyl) and bis(permethylcyclopentadienyl) zirconium dimethyl, (ethyltetramethylcyclopentadienyl) (cyclopentadienyl) and bis(ethyltetramethylcyclopentadienyl)zirconium dimethyl, (indenyl)(cyclopentadienyl) and bis(indenyl)zirconium dimethyl, (dimethylcyclopentadienyl)(cyclopentadienyl) and bis(dimethylcyclopentadienyl)zirconium dihydride, (trimethylcyclopentadienyl) (cyclopentadienyl) and bis (trimethylcyclopentadienyl)zirconium dihydride, (tetramethylcyclopentadienyl) (cyclopentadienyl) and bis(tetramethylcyclopentadienyl)zirconium dihydride, (permethylcyclopentadienyl)(cyclopentadienyl) and bis(permethylcyclopentadienyl)zirconium dihydride, (ethyltetrimethylcyclopentadienyl)(cyclopentadienyl) and bis(ethyltetramethylcyclopentadienyl)zirconium dihydride, (indenyl)(cyclopentadienyl) and bis(indenyl)zirconium dihydride; (metal hydrocarbyl-substituted cyclopentadienyl)zirconium compounds such as (trimethylsilylcyclopentadienyl)(cyclopentadienyl) and bis(trimethylsilylcyclopentadienyl)zirconium dimethyl, (trimethylgermylcyclopentadienyl)(cyclopentadienyl) and bis(trimethylgermylcyclopentadienyl)zirconiun dimethyl, (trimethylstannylcyclopentadienyl)(cyclopentadienyl) and bis(trimethylstannylcyclopentadienyl)zirconium dimethyl, (trimethylplumbylcyclopentadienyl)(cyclopentadienyl) and bis(trimethylplumbylcyclopentadienyl)zirconium dimethyl, (trimethylsilylcyclopentadienyl)(cyclopentadienyl) and bis(trimethylsilylcyclopentadienyl)zirconium dihydride, (trimethylgermylcyclopentadienyl)(cyclopentadienyl) and bis (trimethylgermylcyclopentadienyl)zirconium dihydride, (trimethylstinnylcyclopentadienyl)(cyclopentadienyl) and bis(trimethylstannylcyclopentadienyl)zirconium dihydride, (trimethylplumbylcyclopentadienyl)(cyclopentadienyl) and bis(trimethylplumbylcyclopentadienyl)zirconium dihydride; (halogen-substituted-cyclopentadienyl) zirconium compounds such as (trifluoromethylcyclopentadienyl)(cyclopentadienyl) and bis(trifluoromethylcyclopentadienyl)zirconium dimethyl (trifluoromethylcyclopentadienyl)(cyclopentadienyl) and bis(trifluoromethylcyclopentadienyl)zirconium dihydride; silyl-substituted bis(cyclopentadienyl) zirconium compounds such as bis(cyclopentadienyl) (trimethylsilyl)(methyl)zirconium, bis(cyclopentadienyl) (triphenylsilyl)(methyl)zirconium, bis(cyclopentadienyl) [tris(dimethylsilyl)silyl](methyl) zirconium, bis(cyclopentadienyl)[bis(mesityl)silyl](methyl)zirconium, bis(cyclopentadienyl)(trimethylsilyl)trioethylsilylmethyl) zirconium bis(cyclopentadienyl)(trimethylsilylbenzyl); (bridged-cyclopentadienyl)zirconium compounds such as methylene bis(cyclopentadienyl)zirconium dimethyl, methylene(cyclopentadienyl)zirconium dimethyl, ethylene bis (cyclopentadienyl)zirconium dimethyl, dimethylsilyl bis(cyclopentadienyl)zirconium dihydride, ethylene bis(cyclopentadienyl)zirconium dihydride and dimethylsilyl bis(cyclopentadienyl)zirconium dihydride ; chiral and $C_2$-symmetion compounds; "zirconacycles": assymetrically bridged-dicylopentadienyl compounds such as methylene(cyclopentadienyl)(1-fluorenyl)zirconium dimethyl, dimethysily(cyclopentadienyl)(1-fluorenyl)zirconium dihydride, diphenylmethylene(cyclopentadienyl)(1-fluorenyl)zirconium dimethyl, isopropyl(cyclopentadienyl)(1-fluorenyl)zirconium dimethyl, isopropyl(cyclopentadienyl)(1-octahydrofluorenyl)zirconium dihydride, dimethylsilyl(methylcyclopentadienyl(1-fluorenyl) zirconium dihydride, methylene(cyclopentadienyl(tetramethylcyclopentadienyl)zirconium dimethyl racemic and meso isomers of symmetrically bridged substituted dicyclopentadienyl compounds such as ethylenebis(indenyl)zirconium dimethyl, dimethylsilybis(indenyl)zirconium dimethyl, ethylenebis(tetrahydroindenyl)zirconium dimethyl and dimethylsilybis(3-trimethylsilylcyclopentadientyl)zirconium dihydride; zirconacycles such as bis(pentamethylcyclopentadlenyl) zirconacyclobutane, bis(pentamethylcyclopentadienyl) zirconacyclopentane, bis(cyclopentadienyl)zirconaindane, 1-bis(cyclopentadienyl)zircona-3-dimethylsila-cyclobutane; olefin, diolefin and aryne ligand substituted bis(cyclopentadienyl)zirconium compounds such as bis(cyclopentadienyl) (1,3-butadiene)zirconium, bis(cyclopentadienyl) (2,3-dimethyl-1,3-butadiene)zirconium and bis(pentamethylcyclopentadienyl)(benzyne)zirconium; (hydrocarbyl)(hydride) bls(cyclopentadienyl)zirconium compounds such as bis(pentamethylcyclopentadienyl)zirconium (phenyl)(hydride) and bis(pentamethylcyclopentadlenyl)zirconium (methyl)(hydride); and bis(cyclopentadienyl) zirconium compounds in which a substituent on the cyclopentadienyl radical is bound to the metal such as (pentamethylcyclopentadienyl) (tetramethylcyclopentadienylmethylene) zirconium hydride and (pentamethylcyclopentadlenyl) (tetramethylcyclopentadienylmethylene)zirconium phenyl.

A similar list of illustrative bis(cyclopentadlenyl) hafnium and bis(cyclopentadienyl)titanium compounds could be made, but since the lists would be nearly identical to that already presented with respect to bis(cyclopentadienyl) zirconium compounds, such lists are not deemed essential to a complete disclosure.

it should be noted that the foregoing list is not intended to be exhaustive.

B. The Activator Component

Compounds useful as an activator component in the preparation of the catalyst of this invention will comprise a cation, which is a Bronsted acid and a compatible noncoordinating anion which anion is relatively large (bulky), capable of stabilizing the active catalyst species (the Group IV-B cation) which is formed when the two compounds are combined and said anion will be sufficiently labile to be displaced by olefinic, diolefinic and acetylenically unsaturated substrates or other neutral Lewis bases such as ethers and nitriles. In general, suitable anions for the second component may be any stable and bulky anionic complex having the following molecular attributes: 1) the anion should have a molecular diameter greater than $4 \times 10^{-8}$cm; 2) the anion should form stable ammonium salts; 3) the negative charge on the anion should be delocalized over the framework of the anion or be localized within the core of the anion; 4) the anion should be a relatively poor nucleophile; and 5) the anion should not be a powerful reducing or oxidizing agent. Anions meeting these criteria such as polynuclear boranes, carboranes, metallacarboranes, polyoxoanions and anionic coordination complexes are well described in the chemical literature. Two classes of compatible non-coordinating anions meeting these criteria have been disclosed in EP-A 277,004 and 277,003:

1) anionic coordination complexes comprising a plurality of lipophilic radicals covalently coordinated to and shielding a central charge-bearing metal or metalloid core, and 2) anions comprising a plurality of boron atoms such as carboranes, metallocarboranes and boranes.

In general, the activator compounds containing single anionic coordination complexes which are useful in this invention may be represented by the following general formula:

$$5. \qquad [(L'\text{-}H)^+]_d[(M')^{m+}Q_1Q_2\cdots Q_n]^{d-}$$

Wherein

L' is a neutral Lewis base;
H is a hydrogen atom;
[L'-H] is a Bronsted acid;
M' is a metal or metalloid selected form the Groups subtended by Groups V-B to V-A of the Periodic Table of the Elements; i.e., Groups V-B, VI-B, VII-B, VIII, I-B, II-B, III-A, IV-A, and V-A;
$Q_1$ to $Q_n$ are selected, independently, from the time, hydrocarbyl radicals containing from 1 to 20 carbon atoms, substltuted-hydrocarbyl radicals, wherein one or more of the hydrogen atoms is replaced by a halogen atom, containing from 1 to about 20 carbon atoms, hydrocarbyl-substituted metal (organometalloid) radicals wherein each hydrocarbyl substitution contains from 1 to about 20 carbon atoms and said metal is selected from Group IV-A of the Periodic Table of the Elements.

In general the activator compound may be as on page 6 line 32 onwards of EP-A-277004, wherein, $Ar_1$ and $Ar_2$ may, independently, be any aromatic or substituted-aromatic hydrocarbon radical containing from 6 to 20 carbon atoms. Suitable aromatic radicals include, but are not limited to, phenyl, naphthyl and anthracenyl radicals. Suitable substitutents on the substituted-aromatic hydrocarbon radicals, include, but are not necessarily limited to, hydrocarbyl radicals, organometalloid radicals, alkoxy radicals, alkylamido radicals, fluoro and fluorohydrocarbyl radicals such as those useful as $X_3$ and $X_4$. The substitutent may be ortho, meta or para, relative to the carbon atoms bonded to the boron atom. When either or both $X_3$ or $X_4$ are a hydrocarbyl radical, each may be the same or a different aromatic or substituted-aromatic radical as are $Ar_1$ or $Ar_2$, or the same may be a straight or branched alkyl, alkenyl or alkynyl radical having form 1 to 20 carbon atoms, a cyclic hydrocarbon radical having from 5 to 8 carbon atoms or an alkylsubstituted cyclic hydrocarbon radical having from about 6 to 20 carbon atoms, $X_3$ and $X_4$ may also, independently, be alkoxy or dialkylamido radicals wherein the alkyl portion of said alkoxy and dialkylamido radicals contain from 1 to 20 carbon atoms, hydrocarbyl radicals and organometalloid radicals having from 1 to 20 carbon atoms. As indicated above, $Ar_1$ and $Ar_2$ may be linked to each other. Similarly, either or both of $Ar_1$ and $Ar_2$ could be linked to either $X_3$ or $X_4$. Finally, $X_3$ or $X_4$ may also be linked to each other through a suitable bridging group.

Illustrative, but not limiting, examples of boron compounds which may be used as an activator component in the preparation of the improved catalysts of this invention are trialkyl-substituted ammonium salts such as triethylammonium tetra(phenyl)boron, tripropylammonium tetra(phenyl)boron, tri(n-butyl)ammonium tetra(phenyl)boron, trimethylammonium tetra(p-tolyl)boron, trimethylammonium tetra(o-tolyl)boron, tributylammonium tetra(pentafluorophenyl)boron, tripropylammonium tetra(o,p-dimethylphenyl)boron, tributylammonium tetra(m,m-dimethylphenyl)boron, tributylammonium tetra(p-tri-fluoromethylphenyl)boron and tri(n-butyl)ammonium tetra(o-tolyl)boron; N,N-dialkyl anilinium salts such as N,N-dimethylanilinium tetra(pentafluoro phenyl)boron, N,N-diethylanilinium tetra(phenyl)boron and N,N-2,4,6-pentamethylanilinium tetra(phenyl)boron; dialkyl ammonium salts such as di(i-propyl)ammonium tetra(pentafluorophenyl)boron and dicyclohexylammonium tetra(phenyl)boron; and triaryl phosphonium salts such as triphenylphosphonium tetra(phenyl)boron, tri(methylphenyl)phosphonium tetra(phenyl)boron and tri(dimethylphenyl)phosphonium tetre(phenyl)boron.

Similar lists of suitable compounds containing other metals and metalloids which are useful as activator components may be made, but such lists are not deemed necessary to a complete disclosure. In this regard, it should be noted that the foregoing list is not intended to be exhaustive.

Activator components based on anions which contain a plurality of boron atoms may be represented by the following general formulae:

6. $$[L'\text{-}H]_c[(CX)_a)(M''X')_m X'_b]^{c-}$$

7. $$[L'\text{-}H)_d[[[(CX_3)_{a'}(M''X_4)_{m'}(X_5)_{b'}]^{c'-}]_2 M^{n+}]^{d-}$$

wherein [L'-X] is either X+, ammonium or a substituted ammonium cation having up to 3 hydrogen atoms replaced with a hydrocarbyl radical containing from 1 to 20 carbon atoms or a substituted-hydrocarbyl radical, wherein one or more of the hydrogen atoms is replaced by a halogen atom, containing from 1 to 20 carbon atoms, phosphonium radicals, substituted-phosphonium radicals having up to 3 hydrogen atoms replaced with a hydrocarbyl radical containing from 1 to 20 carbon atoms or a substituted-hydrocarbyl radical, wherein 1 or more of the hydrogen atoms is replaced by a halogen atom, containing from 1 to 20 carbon atoms ; C is carbon; M" is boron each of X, X', X". $X_3$ $X_4$ and $X_5$ are radicals selectea, independently, from the group consisting of hydride radicals, halide radicals, hydrocarbyl radicals containing from 1 to 20 carbon atoms, substituted-hydrocarbyl radicals, wherein one or more of the hydrogen atoms is replaced by a halogen atom, containing from 1 to 20 carbon atoms, organometalloid radicals wherein each hydrocarbyl substitution in the organo portion contains from 1 to 20 carbon atoms and said metal is selected from Group IV-A of the Periodic Table of the Elements; M is a transition metal; "a" and "b" are integers ≥ 0; "c" is an integer ≥ 1; a + b + c = an even-numbered integer from 2 to 8; and "m" is an integer ranging from 5 to 22; "a'" and "b'" are the same or a different integer ≥ 0; "c'" is an integer ≥ 2; a' + b' + c' = an even-numbered integer from 4 to 8; "m" is an integer from 6 to 12; "n" is an integer such that 2c' - n = d; and "d" is an integer greater than or equal to 1.

Illustrative, but not limiting, examples of second components which can be used in preparing catalyst systems utilized in the process of this invention wherein the anion of the second component contains a plurality of metalloid atoms (as in formulae 5 and 6) are ammonium salts such as ammonium 1-carbadodecaborite (using 1-carbadodecaborite as an illustrative, but not limiting, counterion for the ammonium cations listed below): nonohydrocarbyl-substituted ammonium salts such as methylammonium 1-carbadodecaborate, ethylammonium 1-carbadodecaborate, propylammonium 1-carbadodecaborate, isopropylammonium 1-carbadodecaborate, (n-butyl)ammonium 1-carbadodecaborate, anilinium 1-carbadodecaborate, and (p-tolyl)ammonium 1-carbadodecaborate ; dlhydrocarbyl-substituted ammonium salts such as dimethylammonium 1-carbadodecaborate, diethylammonium 1-carbidodecaborate, dipropylammonium 1-carbadodecaborate, diisopropylammonium 1-carbadodecaborate, di(n-butyl) ammonium 1-carbadodecaborate, diphenylammonium 1-carbadodecaborate, di(p-tolyl)amunium 1-carbadodecaborate; trihydrocarbyl-substituted ammonium salts such as trimethylammonium 1-carbadodecaborate, triethylammonium 1-carbadodecaborate, tripropylammonium 1-carbadodecaborate, tri(n-butyl) ammonium 1-carbadodecaborate, triphenylammonium 1-carbadodecaborate, tri(p-tolyl)ammonium 1-carbadodecaborate, N,N-dimethylanilinium 1-carbadodecaborate, N,N-diethylanilinium 1-carbadodecaborate.

Illustrative, but not limiting examples of second compounds corresponding to Formula 5 [using tri(n-butyl)amnonium as an illustrative, but not limiting, counterion for the anions listed below] are salts of anions such as bis[tri(n-butyl) ammonium] nonaborate, bis[tri(n-butyl)ammonium]decaborate, bis[tri(n-butyl) ammonium]undecaborate, bis[tri(n-butyl)ammonium] dodecaborate, bis[tri(n-butyl)ammonium]decachlorodecaborate, tri(n-butyl)ammonium dodecachlorododecaborite, tri(n-butyl)ammonium 1-carbadecaborate, tri(n-butyl) ammonium 1-carbaundecaborate, tri(n-butyl) ammonium 1-carbadodecaborate, tri(n-butyl)amnonium 1-trimethylsilyl-1-carbadecaborate, tri(n-butyl)ammonium dibromo-1-carbadodecaborate ; borane and carborane complexes and salts of borane and carborane anions such as decaborane(14), 7,8-dicarbaundecaborane(13), 2,7-dicarbaundecaborane(13), undecahydrido-7,8-dimethyl-7,8-dicarbaundecaborane, dodecahydrido-11-methyl-2,7-di-carbaundecaborane, tri(n-butyl) ammonium undecaborate(14), tri(n-butyl)ammonium 6-carbadecaborate(12), tri(n-butyl)ammonium 7-carbaundecaborate(13), tri(n-butyl)ammonium 7,8-dicarbaundecaborate(12), tri(n-butyl)ammonium 2,9-dicarbaundecaborate(12), tri(n-butyl)ammonium dodecahydrido-8-methyl-7,9-dicarbaundecaborate, tri(n-butyl)ammonium undecahydrldo-8-ethyl-7,9-dicarbaundecaborate, tri (n-butyl) ammonium undecahydrido-8-butyl-7,9-dicarbaundecaborate, tri(n-butyl)ammonium undecahydrido-8-allyl-7,9-dicarbaundecaborate, tri(n-butyl)ammonium undecahydrldo-9-trimethylsilyl-7.8-dlcarbaundecaborate, tri(n-butyl) ammonium undecahydrido-4,6-dibromo-7-carbaundecaborate : boranes and carboranes and salts of boranes and carboranes such as 4-carbanonaborane(14), 1,3-dicarbanonaborane(13), 6,9-dicarbadecaborane(14), dodecahydrido-1-phenyl-1,3-dicarbanonaborane, dodecahydrido-1-methyl-1,3-dicarbanonaborane, undecahydrido-1,3-dimethyl-1,3-dicarbanonaborane.

Illustrative, but not limiting, examples of second compounds corresponding to Formula 7 [using tri(n-butyl)ammonium as an illustrative, but not limiting, counterion for the anions listed below] are salts of metallacarborane and metallaborane anions such as tri(n-butyl)ammonium bis(nonahydrido-1,3-dicarbanonaborato) cobaltate(III), tri(n-butyl)ammonium bis(undeca-hydrido-7,8-dicarbaundecaboratoferrate(III), tri(n-butyl) ammonium bis(undecahydrido-7,8-dicarbaundecaborato)cobaltate(III), tri(n-butyl)amnonium bis(undecahydrido-7,8-dicarbaunaborato) nikelate(III), tri(n-butyl) ammonium bis(nonahydrido-7, 8-dimethyl-7,8-dicarbaundecaborato)ferrate(III), tri(n-butyl)ammonium bis(nonahydrido-7,8-dimethyl-7,8-dicarbaundecaborato)chromate(III), tri(n-butyl)ammonium bis(tribromooctahydrido-7,8-dicarbaundecaborato)cobaltate(III), tri(n-butyl)ammonium bis(dodecahydridodicarbadodecaborato) cobaltate(III), tris[tri(n-butyl)ammonium] bis (undecahydrido-7-carbaundecaborato)chromate(III), bis[tri(n-butyl) ammonium] bis(undecahydrido-7-carbaundecaborato)manganate(IV), bis[tri(N-butyl)ammonium] bis(undecahydrido-7-carbaundecaborato) cobaltate(III), bis[tri (n-butyl)amonium]. bis(undecahydrido-7-carbaundecaborato) nlckelate(IV) . A similar list of representative phosphonium compounds can be recited as illustrative second compounds, but for the sake of brevity, It is simply noted that the phosphonium and substituted-phosphonium salts corresponding to the listed ammonium and substituted-ammonium salts could be used as second compounds in the present invention.

<u>Choice of Hetallocene-Activator Pairs</u>

In general, and while most metallocene components identified above may be combined with most activator components identified above to produce an active olefin polymerization catalyst, it is important for continuity of the polymerization operations that either the metal cation initially formed from the metallocene component or a decomposition product thereof be a relatively stable catalyst. It is also important that the anion of the activator compound be stable to hydrolysis when an ammonium salt is used. Further, it is important that the acidity of the activator component be sufficient, relative to the metallocene component, to facilitate the needed proton transfer. Activator compounds containing aryl-ammonium salts such as N,N-dimethylanilium are more acidic than trialkylammonium salts and therefore are useful with a wider variety of metallocene components. The basicity of the metal complex must also be sufficient to facilitate the needed proton transfer. In general, bis(cyclopentadienyl)metal compounds which can be hydrolyzed by aqueous solutions can be considered suitable as metallocene components to form the catalysts described herein.

The chemical reactions which occur may be represented by reference to the general formulae set forth herein as follows:

A. $(A\text{-}Cp)MX_1X_2 + [L'\text{-}H]^+[B']^- \rightarrow [(A\text{-}Cp)MX_1]^+[B']^- + HX_2 + L'$ or

$[(A\text{-}Cp)MX_2]^+[B']^- + HX_1 + L'$

B. $(A\text{-}Cp)MX'_1X'_2 + [L'\text{-}H]^+[B']^- \rightarrow [(A\text{-}Cp)MX'_1X'_2H]^+[B']^- + L'$ or

$[(A\text{-}Cp)MX'_2X'_1H]^+[B']^- + L'$

C. $(A\text{-}Cp)ML + [L'\text{-}H]^+[B']^- \rightarrow [(A\text{-}Cp)M(LH)]^+[B']^- + L'$

D. $(Cp^*)(RCp)MX_1 + [L'\text{-}H]^+[B_1]^- \rightarrow [(Cp^*)(HR\text{-}Cp)MX_1]^+[B']^- + L'$ or

$[(Cp^*)(R\text{-}Cp)M]^+[B']^- + HX_1 + L'$

In the foregoing reaction equations, the letters A-D correspond to the numbers 1-4, respectively, set forth in combination with the general equations for useful metallocene compounds. B' represents a compatible ion corresponding to the general formulae outlined in formulae 5, 6 and 7 above. When the metallocene and activator components used to prepare the improved catalysts of the present invention are combined in a suitable solvent or diluent, all or a part of the cation of the activator (the acidic proton) combines with one of the substituents on the metallocene compound. In the case where the metallocene component has a formula corresponding to that of general formula 1, a neutral compound is liberated, which neutral compound either remains in solution or is liberated as a gas. In this regard, it should be noted that if either $X_1$ or $X_2$ in the metallocene component is a hydride, hydrogen gas may be liberated. Similarly, if either $X_1$ or $X_2$ is a methyl radical, methane may be liberated as a gas. In the cases where the first component has a formula corresponding to those of general formulae 2, 3 or 4 (optional), one of the substituents on the metallocene component is protonated but no substitutent is liberated. In general, the stability and rate of formation of the products in the foregoing reaction equations will vary depending upon the choice of the solvent, the acidity of the [L'-H]' selected, the particular L', the anion, the temperature at which the reaction is completed and the particular cyclopentadienyl derivative of the metal selected.

With respect to the combination of the metallocene component with the activator component to form a catalyst of this invention, it should be noted that the two compounds combined for preparation of the active catalyst must be selected so as to avoid transfer of a fragment of the anion to the metal cation, thereby forming a catalytically inactive species. This could be done by steric hindrance, resulting from substitutions on the cyclopentadienyl carbon atoms as well as substitutions on the non-coordinating anion.

It follows, then, that the metallocene components comprising perhydrocarbyl-substituted cyclopentadienyl radicals could be effectively used with a broader range of activator compounds than could metallocene components comprising unsubstituted cyclopentadienyl radicals.

As the amount and size of the substitutions on the cyclopentadienyl radicals are reduced, however, more effective catalysts are obtained with activator compounds containing non-coordinating anions which are larger in size and more resistant to degradation. In the case where the non-coordinating anion is an anionic coordination complex, such as a tetraphenylboron derivative, substitutions on the phenyl rings can be used to prevent the transfer of a proton or an entire phenyl group from the anion to the metal. This can be accomplished by alkyl substitution in the ortho positions of the phenyl groups, or, more preferably, by perfluoro-substitutions on the anion. Thus, anionic coordination complexes containing perfluorophenyl-, trifluoromethylphenyl-, or bis-trifluoromethylphenyl rings are preferred for this subgenus of activator components. When the non-coordinating anion contains a plurality of boron atoms as described in general formulae 6 and 7, more effective catalysts are obtained with activator compounds containing larger anions, such as those encompassed by Equation 7 and those having larger m values in Equation 6. In these cases it is further preferable when using second compounds which are encompassed by Equation 6, that $a + b + c = 2$. Second compounds in which $a + b + c$ = even-numbered integers of 4 or more have acidic B-H-B moieties which can react further with the metal cation formed, leading to catalytically inactive compounds.

As indicated supra, most metallocene compounds will combine with most activator compounds to give an active polymerization catalyst. The initially formed catalyst is not, however, always sufficiently stable as to permit its separation and subsequent identification. However, catalysts which are thermally stable are preferred for the production of block copolymers. Three structurally distinct forms of thermally stable ionic catalysts have been identified by NMR spectroscopy and are shown below in equation 8.

8a. $[A\text{-}CpMX_1][(C_2B_9H_{11})_2Co]$

8b. $[A\text{-}CpMX_1(L')][B(C_6F_5)_3(X_3)]$

8c. $[(A\text{-}CpMX_1)_2X_1][B']$

in the foregoing reactions the symbols A-Cp, M, $X_1$, L' and $X_3$ correspond to the definitions set forth in equations 1-4 and 5-5a, respectively; B' represents a compatible non-coordinating anion corresponding to the general formulae set forth in equations 5, 6 and 7. In example 8a, NMR spectroscopy indicates that the metallacarborane anion is weakly bound to the metal center; the biproduct L' does not form an observable coordination complex with the metallocene center. In 8b, NMR experiments indicate that the fluorinated boron anion is completely non-coordinating and that L', weakly coordinates to and stabilizes the metallocene cation when the tertiary amine (L') is an aniline derivative. The ability of L' to coordinate to the metal is important to the stability of the catalyst systems which have highly noncoordinating anions. The Lewis basicity of the L' can affect the rate of polymerization and other polymerization parameters. Experience has shown that when the bulk of the amine or the metallocene cation is increased by substitutions on the nitrogen atom or the cyclopentadienyl ligands respectively, the ability for the amine to coordinate to the metal center decreases. Addition of excess metallocene $ACpM(X_1)_2$ to 8a or 8b results in displacement of the anion in 8a or the aniline ligand in 8b to form a stable dimeric cation 8c.

Preferred Catalysts for the Production of Block Copolymers

Ideal catalyst systems for the production of block copolymers are single-sited living catalysts. Living catalysts are those systems in which chain transfer is nonexistent and the rate of initiation is fast compared to propagation. Catalysts which have finite chain transfer rates may also be useful for the production of block and tapered copolymers if the rate of propagation is fast relative to termination. It is also important that the average chain lifetimes are reasonably long (minutes to hours) in order to permit adequate time for modifications of the reactor conditions (e.g. changing monomer feed streams). While most reasonably stable ionic catalysts described above will under suitable conditions produce block and/or tapered copolymers of nonpolar olefins, it is preferred that the catalyst be: 1) thermally stable (recoverable as a single organometallic complex), 2) versatile In terms of random copolymer synthesis (i.e. capable of preparing e. g. HDPE, i-PP, s-PP, EP-rubber and LLDPE), 3) capable of producing high molecular weight polymers at reasonable temperatures and pressures, 4) high activity (fast propagation catalysts) and 5) slow in chain termination reactions so that few chains of polymer product are produced per hour per site.

Ionic catalysts of the form [A-CpMMe(L')][$B(C_6F_5)_3(X_3)$] are the preferred catalysts for the production of block and tapered copolymers of ethylene, 1-olefins, dienes, cyclic olefins and other unsaturated monomers. Ionic catalysts of this form where M = Hf are the most preferred catalyst systems because they are more stable, produce higher molecular weight copolymers, and have longer chain lifetimes than corresponding Zr or Ti-based systems. Polymerizations using hafnium systems of this form under standard random copolymer conditions as described in EPA-277,004 produce high molecular weight HDPE, LLDPE, a-PP, i-PP, s-PP, and EP-rubber at rates comparable to similar Zr-based catalysts. Tapered and block copolymers containing these segments can be produced using the appropriate hafnium ionic catalyst using the techniques and process conditions set forth in the following sections.

Processes For the Production of Block Copolymers

Many procedures for modifying the reactor conditions and monomer feeds for the production of block copolymers have been developed and applied using conventional Ziegler-Natta catalysts. The patent literature concerning block copolymer from Ziegler-Natta catalysts disclose a variety of processes for altering reactor conditions. The processes include batch reactors and sequential additions techniques, series batch reactors, loop and tubular reactors, and fluidized bed reactors. A review of the processes and patents is given in chapter 4 of "Block Copolymers" [D. C. Allport and W. H. James; John Wiley and Sons, New York 1973]. As indicated supra, the application of these processes using conventional catalysts in general produces broad molecular weight distributions of poorly defined polymer blends. In principle, the catalysts of this invention can be used in any of the processes described above for the production well-defined block copolymers of higher purity than obtained using conventional Ziegler-Natta catalysts.

The most demanding process, that is the process which requires the longest chain lifetimes, is the sequential addition. When the catalyst or initiator produces growing chains with sufficiently long lifetimes, the sequential addition technique allows for the production of block copolymers having non-tapered transitions between different polymer segments. Sequential addition techniques are commonly used to produce styrenic block copolymers (Kraton for example) using anionic initiators.

In the first step of the sequential addition process employed in accordance with this invention the catalyst is placed in a well stirred batch reactor in a suitable solvent and first segment of the block copolymer is grown by adding a specific number of molar equivalents of monomer(s). The catalyst consumes all of the monomer(s) prior to addition of the second monomer(s) (a different set of monomers than in the first step). This procedure can be repeated to prepare multiblock copolymers.

Sequential Addition Conditions

For a given catalyst and target block copolymer a solvent, temperature and catalyst concentration must be chosen so that 1) narrow molecular weight distribution, high molecular weight copolymer segments can be synthesized; and 2) the molecular weight of the copolymer segments can be controlled by varying the catalyst-to-monomer molar ratio. Under these conditions the system is behaving in a quasiliving fashion (i.e. slow chain transfer) and narrow molecular weight block copolymers can be prepared in high yield. Methods for choosing the conditions for a particular catalyst system are given below.

Solvent

Preferably, the solvent should normally disperse or dissolve the catalyst to form a well-mixed system. The most preferred catalysts for block copolymer synthesis, [ACpHfMe(L')][$B(C_6F_5)_4$], are prepared in toluene and form non-misible, toluene-dispersible phases. This two-component phase contains the catalyst and a particular amount of toluene; the concentration of toluene in the catalyst phase depends on temperature and the structure of the catalyst. Addition of an aliphatic hydrocarbon to the toluene-catalyst emulsion causes immediate precipitation of the catalyst from solution to give a soft waxy, non-dispersible catalyst deposit. While aliphatic hydrocarbons, fluorinated hydrocarbons, and chlorinated aromatic hydrocarbons may be used in this invention, the preferred solvents for the preparation of block copolymers from the most preferred catalysts are aromatic hydrocarbons such as toluene, xylene and ethyl benzene. The lack of solubility or compatibility of the catalyst phase in the aromatic solvent does not present significant problems in terms of molecular weight broadening because the phase is highly dispersible even at lower temperatures.

Temperature

The reactor temperature strongly affects the yield of block copolymer and must be adjusted depending on the type and concentration of monomers and catalyst used. The general procedure for determining this condition is to 1) find the maximum temperature where high molecular weight polymer segments can be prepared and 2) confirm the molecular weight is controlled by the catalyst-to-monomer ratio at this temperature. The general trend is that higher temperatures cause chain transfer to be more rapid relative to propagation and therefore give lower block copolymer yields. The process may be carried out at temperatures of -80°C to 80°C, however, it is preferred that the temperature be in the range of -10°C to 20°C.

Concentration of Catalyst

The concentration should be high enough to produce significant rates of polymerization under the generally low pressure conditions of sequential addition. The concentration should not be so high as to produce uncontrollable exotherms upon exposure to the monomer. The exotherm can be controlled, however, by adjusting the rate of monomer addition during the formation of a block segment. This level of control allows for a large range of acceptable catalysts concentrations. The process may be carried out at catalyst concentrations ranging from 6 x $10^{-6}$ to 6 x $10^{-2}$ moles of catalyst/liter of solution, however it is preferred that catalyst levels be in the range of 1 x $10^{-4}$ to 3 x $10^{-2}$ moles of catalyst/liter of solution.

Monomer Concentration

The amount of monomer added depends on the molecular weight of the targeted polymer and the moles of active catalyst in the reactor. Molar ratios of monomer to catalyst may be in the range of 10:1 to 10,000:1. The monomers may be added quickly or may be metered in to the reactor to control exotherms.

Order of Monomer Addition

Precipitation of polymer (with catalyst attached) causes undesirable broadening of the molecular weight distribution due to mass transport limitations and poor mixing. It is therefore preferred to prepare the soluble block (generally the elastomeric segment) in the first stage of the reaction. Thus, as indicated in the examples, when ethylene is added in the first step in the synthesis of a HDPE-b-atactic-PP diblock copolymer the initially formed polyethylene precipitates with the catalyst and the final molecular weight distribution of crude block copolymer product is rather broad (Mw/Mn = 3.0). Addition of propylene in the first step produces a system which remains homogeneous throughout the block copolymer synthesis, yielding a crude product having a much narrower MwMn = (1.7-1.8).

Preparation of Block Copolymers

Addition of stoichiometric amounts of a mixture of two olefins to the reactor under block copolymer conditions will naturally produce tapered blocks in the block copolymer because the monomers will generally have different reactivities with the catalyst. Thus, the head of the polymer will be rich in the more reactive comonomer while the polymer tail will contain larger amounts of the slower reacting comonomer. The extent of tapering will depend on magnitude of the difference of monomer reactivity. The extent of tapering can be controlled by metering the two monomers into the reactor at different rates.

Block Copolymer Products

The polymer products of this invention are olefinic block copolymers having narrow molecular weight distributions and well defined di-, tri- or multiblock structures. The polymer segments which can be incorporated into these architectures include 1) elastomers such as atactic polypropylene, atactic poly-1-olefins, and ethylene/1-olefin copolymers

wherein the ethylene comonomer is a $C_3$-$C_{18}$ $\alpha$-olefin such as ethylene-propylene, ethylene butene, and ethylene-octene copolymers ethylene-propylene-diene terpolymers and other crosslinkable elastomeric olefins; 2) thermoplastics such as high density polyethylene, linear low density polyethylene having melting points from 80-135°C (e.g. ethylene-propylene and other ethylene-1-olefin copolymers wherein each 1-olefin has from 4 to 20 carbon atoms), ethyleneldiene copolymers such as ethylene/ethylidene-norbornene copolymers, isotactic polypropylene having melting points from 100°C-165°C, syndiotactic polypropylenes having melting points from 100°C-165°C, hemi-isotactic polypropylenes and other crystalline 1-olefin homo and copolymers; and 3) glasses such as homopolycyclopentene, homopolynorborene. The average molecular weight of the polymer segments included in the novel block copolymers of this invention can be in the range of from 100-1,000,000 daltons, preferably from 30,000 to 200,000 daltons. The molecular weight distributions (Mw/Mn) of the crude and/or fractionated block copolymer are in the range from 1.0 to 5.0, preferably from 1.1 to 2.0.

The block copolymers obtainable in this invention can be represented by the following general formulae:

$$(A_1)(A_2)(A_3)\cdots(An)$$

wherein each A is a polymer segment having an average molecular weight from about 100 to about 1,000,000 daltons chosen independently from homopolymers consisting of HDPE, homo and copolymers of cyclic olefins, such as polycyclopentene and polynorbomene, and isotactic, atactic, and syndiotactic poly-1-olefins such as atactic-PP, isotactic-PP, syndiotactic-PP; random copolymers of 1-olefins and diolefins such as ethylene-propylene rubber, ethylene-propylene-hexadiene rubber, ethylene-butene rubber, linear low density polyethylenes, such that no adjacent segments are the same polymer composition.

Novel block copolymers of this invention include but are not limited to diblock copolymers such as (HDPE)(EP), (i-PP)(EP), (LLDPE)(a-PP), (HDPE)(a-PP), (LLDPE)(HDPE), and triblock copolymers such as (HDPE)(EP)(HDPE), (HDPE)(a-PP)(HDPE), (HDPE)(EP)LLDPE), (LLDPE)(a-PP)(LLDPE), (HDPE)(a-PP)(LLDPE), (i-PP)(EP)(i-PP), (s-PP)(EP)(s-PP) . It will be recognized to those well versed in the field that the isotactic polypropylene segments contained in the block copolymers of this invention have microstructure defects which are not observed in conventional I-PP materials prepared using titanium Ziegler-Natta catalyst. The microstructure defects which are unique to isotactic polypropylenes prepared using metallocene catalysts arise from 1-3 and 2-1 additions to propylene. The melting points of such materials can vary from 60°C to 165°C depending on the total number total defects.

Tapered copolymers can be represented by similar general formula where the transitions between idealized polymer segments An are gradual. These gradient transitions between segments are represented by arrows.

$$(A_1)\text{--->}(A_2)\text{--->}(A_3)\text{--->}\cdots(A_n).$$

An example of this would be a polymer prepared by reacting a 50-50 mixture of ethylene and propylene with a living catalyst which has a high preference for ethylene over propylene. The tapered polymer obtained in such an experiment would be designated by the following formula:

HDPE--->EP--->a-PP

EXAMPLES

Catalyst Preparation. The catalyst used in the following examples was prepared in dry, deoxygenated toluene ($5.0cm^3$) by reacting $Cp_2HfMe_2$ with one equivalent of $[DMAH][B(pfp)_4]$ (where DMAH = $PhMe_2NH_+$ and pfp = $C_6F_5$) at room temperatur for 5-10 minutes. The reaction is known to cleanly produce methane gas and a single ionic catalyst $[Cp_2HfMe(PhNMe_2)][B(pfp)_4]$.

Example 1

First Ethylene then Propylene.

The reactor was cooled to 0°C and charged with 400 mls of toluene and 0.30 mmoles of catalyst. Ethylene (4.0 grams; 0.143 moles) was added to the reactor. After all the ethylene was consumed, propylene (6 grams; 0.139 moles) was added; after 30 minutes the reactor was dropped and the product collected. The crude product contained 50 mole % propylene, had an $M_n$ = 87,000 with a molecular weight distribution of 3.0. The crude product was washed with

hexane at room temperature to remove any α-PP which was not in the form of block copolymer. The hexane insoluble material contained crystalline HDPE (as determined by IR) and 30 mole % propylene; the $M_n$ was 144,000 with a molecular weight distribution of 1.89. The hexane soluble fraction was α-PP, did not contain ethylene (by IR), and had a $M_n$ of 63,000 with a molecular weight distribution of 1.47. Based on the extraction studies, it was concluded that 50-601 of the α-PP chains were incorporated into a block copolymer under these conditions.

Example 2

First Propylene Then Ethylene

The procedure of Example 1 was repeated except propylene was added first. The crude product had 41 mole % propylene (IR), a $M_n$ of 170,000 with a molecular weight distribution of 1.78. A pad was pressed and extracted with hexane for 4 hours. At this point, the material contained 37 mole % propylene and very crystalline HDPE. The pad was further extracted with toluene at room temperature for 50 hours with no loss of weight. The extracted "diblock" had a $M_n$ of 230,000 and a molecular weight distribution of 1.48 (the hexane solubles were α-PP having a Mn of 125,000 and a molecular weight distribution of 1.72).

Example 3

Molecular Weight Control In Block Copolymer Synthesis

Using the procedure in Example 2, 3.0 grams of propylene (0.070 moles) were added to 0.30 mmole of the hafnium catalyst. After the propylene (0.071 moles) was completely consumed, 2.0 grams of ethylene were added to the system. The resulting product was washed with hexane at room temperature to remove any α-PP. The resulting block copolymer had a Mn of 107,000 and a molecular weight distribution of 1.68, and contained 42 mole % propylene by IR spectroscopy.

Example 4

Effect of Temperature

If the temperature is raised the effect is to lower the efficiency of the block formation. The temperature was raised iron 0°C to 10°C and the blocking efficiency was reduced to less than 10% to 65%. When the temperature was lowered to -5°C, the blocking efficiency improved 78%.

Example 5

The Effect of Increasing the Time Between the Addition of Monomers

A series of block copolymerizations were run at 0°C and the time between the addition of propylene and ethylene was varied from 6 to 42 minutes. The crude products were collected, analyzed by GPC and IR, then extracted with hexane at room temperature for 65 hours to remove unblocked α-PP. In a well-behaved system wherein the extraction technique removes all of the α-PP, a logarithmically increase in the percent of hexane extractables with time would be expected. The data of this example is shown in Fig. 1 in graphical form. The Y-axis represents the percent of polypropylene which is incorporated into the block copolymer. The extractables were isolated and analyzed by GPC and IR; they were all pure α-PP. The correlation is close to the linear result expected so that this technique can be used to evaluate the kinetics of chain loss under a variety of conditions. This result confirms the ability to make true block copolymers, and confirms that hexane extraction is a good measure of block copolymer efficiency for this polymer system.

Example 6

Preparation of EP

In this example, 1.6 grams of propylene (0.037 moles) were added to $[Cp_2HfMe(L)][B(pfp)_4]$ (0.30 mmole) in 400cm$^3$ of toluene at 0°C. Immediately after the propylene addition, 1.1 grams of ethylene (0.039 moles) was metered in over 3 minutes. After six minutes, the product was recovered yielding 2.7 grams of amorphous EP rubber. The product was non-crystalline by IR; the polymer had a $M_n$ of 96,000 and a molecular weight distribution of 1.69.

Example 7

Preparation of EP

In this example, 3.2 grams of propylene (0.074 moles) was added to $[Cp_2HfMe(L)][B(pfp)_4]$ (0.30 mmole) in $400 cm^3$ of toluene at 0°C. Ethylene (2.2 grams; 0.078 moles) was added to the reactor over 5.5 minutes. The product was recovered yielding 5.7 grams of EP rubber having a $M_n$ of 155,000, and a molecular weight distribution of 1.48. The IR showed some degree of PE-crystallinity.

Example 8

Preparation of EP-b-HDPE

Example 6 was repeated to prepare "living" EP-rubber. After all the monomer had been consumed, ethylene (1.1 grams) was added to prepare the desired block copolymer. The product was recovered yielding 4.25 grams of copolymer. The IR showed PE crystallinity and the polymer had thermoplastic-like properties. The onset of Tg was -52.9°C and the product had a melting point of 119°C. The $M_n$ of the crude product was 161,000 with a molecular weight distribution of 1.59.

Example 9. The intention of this example is to demonstrate that slow chain transfer can be used to catalytically prepare block copolymers. This is an example of in-situ catalyst recycle leading to the production of mixtures of small amounts of homopolymer and mixtures of multiblock copolymers (AB, ABA, BAB etc).

The reactor was cooled to 0°C and charged with 400 $cm^3$ of toluene and 0.15 mmole of catalyst. In step 1, propylene (1.5 grams) was added to the well stirred reactor causing a pressure increase of 48.3 kPa (7 psi). After 7 minutes the pressure in the reactor dropped to zero and the reactor was vented through a nujol bubbler to remove any residual propylene in the system. In step 2, ethylene (1.0 grams) was added. The ethylene was consumed in less than one minute. After all the ethylene was consumed the reactor was vented. These sequential steps were repeated 5 more times resulting in similar monomer conversion rates. The re;ctor was dropped and the the product was collected yielding 15 grams after drying. The crude product was analyzed by GPC and had a Mn = 122K and a MWD = 2.2. The melting point was 126°C by DSC and the IR indicated the presence of high crystallinity polyethylene. A thin pad weighing 1.25 grams was compression molded and extracted with hexane a room temperature for 72 hours at room temperature. The pad was removed, dried and weighed yielding 1.13 grams of insoluble material. The insoluble material was analyzed by GPC and DSC and had a Mn = 171K, a MWD = 1.8 and a melting point of 126°C. The soluble material was isolated (0.12 grams) and was identified as atactic PP. The extraction data indicated that 84% of the polypropylene is bonded to insoluble polyethylene segments. The data are not sufficient to detect homo-polyethylene, or to quantify the ratios of the various possible multiblock copolymers. The observation, however, that the Mn of the crude and extracted products in this experiment are only slightly higher than is typical of a standard A-B sequential addition (Mn = 1201-140K) at the same monomer:catalyst ratio suggests that the chain lifetimes are not sufficiently long to produce high amounts of triblock or other higher order block copolymers.

Example 10. The reactor was cooled to 0°C and charged with 400 $cm^3$ of toluene and 0.15 mmole of catalyst. In step 1, propylene (1.5 grams) was added to the well stirred reactor causing a pressure increase of 48.3 kPa (7 psi). After 7 minutes the pressure in the reactor dropped to zero and the reactor was vented through a nujol bubbler to remove any residual propylene in the system. In step 2, ethylene (1.0 grams) was added. The ethylene was consumed in less than one minute. After all the ethylene was consumed the reactor was vented and in step 3 propylene (1.5 grams) was added. The propylene was consumed in 7 minutes and after an addition 20 minute waiting period steps 1,2 and 3 were repeated. The reactor was dropped and 4 grams of crude dry product was isolated. The crude product was analyzed by GPC and had a Mn = 140K and a MWD = 1.7. The IR spectrum indicated the presence of high crystallinity polyethylene. A thin pad weighing 1.07 grams was compression molded and extracted with hexane a room temperature for 72 hours at room temperature. The pad was removed, dried and weighed yielding 0.87 grams of insoluble material. The insoluble material was analyzed by GPC had a Mm = 192K, a MWD = 1.4. The soluble material was isolated (0.20 grams) and was identified as atactic PP by IR and NMR spectroscopy. The extraction data indicated that 81% of the polypropylene is bonded to insoluble polyethylene segments.

Example 11. In this example we describe an attempt to prepare an ABA triblock copolymer where the A-block is high density polyethylene and the B-block is elastomeric atactic polypropylene. We disclose a technique where a small amount of propylene (5% of the amount added in the B-step) is added in a prepolymerization step. The effect of this is to solubilize the insoluble polyethylene A-segment and prevent precipitation of the living polymer. When this procedure is used a clear, apparently homogeneous reaction mixture is formed. Similar experiments where the prepolymerization step is not used gives a heterogeneous reaction mixture, lower blocking efficiencies and broader molecular weight distributions.

The reactor was cooled to 0°C and charged with 400 $cm^3$ of toluene and 0.15 mmole of catalyst. In a prepolymerization step 1, propylene (0.15 grams) was added to the well stirred reactor. After 7 minutes the pressure in the reactor dropped to zero and the reactor was vented through a nujol bubbler to remove any residual propylene in the system. In step 2, ethylene (0.5 grams) was added. After 2 minutes, propylene (3.0 grams) was added to the well stirred reactor causing a pressure increase of 48.3 kPa (7 psi).The propylene was consumed in 4 minutes at which point the reactor was vented and ethylene (0.5 grams) was added. The reactor was dropped and approximately 4 grams of crude dry product was isolated. The crude product was analyzed by GPC and DSC and had a melting point of 122°C, a Mn - 173K and a MWD = 1.9 (with a bimodal shape). A thin pad weighing 1.295 grams was compression molded and extracted with hexane a room temperature for 72 hours at room temperature. The pad was removed, dried and weighed yielding 1.17 grams of insoluble material. The resulting material has thermoplastic elastomeric properties. The extraction data indicated that 86% of the polypropylene is bonded to insoluble polyethylene segments.

Example 12. The reactor was cooled to 0°C and charged with 400 $cm^3$ of toluene and 0.15 mmole of catalyst. In a prepolymerization step 1, propylene (0.15 grams) was added to the well stirred reactor. After 7 minutes the pressure in the reactor dropped to zero and the reactor was vented through a nujol bubbler to remove any residual propylene in the system. In step 2, ethylene (0.25 grams) was added. After 2 minutes, propylene (3.0 grams) was added to the well stirred reactor causing a pressure increase of 48.3 kPa (7 psi). The propylene was consumed in 4 minutes at which point the reactor was vented and ethylene (0.25 grams) was added. The reactor was dropped and approximately 3.5 grams of crude dry product was isolated. The crude product was analyzed by GPC and DSC and had a melting point of 122°C, a Mn = 160K and a MWD = 1.8 (with a bimodal shape). A thin pad weighing 1.288 grams was compression molded and extracted with hexane a room temperature for 72 hours at room temperature. The extremely swollen pad was removed, dried and weighed yielding 1.165 grams of insoluble material. The resulting material has thermoplastic elastomeric properties. The extraction data indicated that 88% of the polypropylene is bonded to insoluble polyethylene segments. The insoluble product was analyzed by GPC and had a Mn = 184K and a MWD = 1.6 (with a bimodal shape).

## Claims

1. A process for the production of a block copolymer comprising:

    (1) contacting at least one first olefinic monomer with a catalyst comprising:

        (a) a Group IVB metallocene cation with a formal coordination number of 3 and a valence of +4 and
        (b) a non-coordinating anion which is bulky, capable of stabilising the caticn or a decomposition product and sufficiently labile to permit displacement by an olefin, diolefin or acetylenically unsaturated monomers to produce a first living polymer

    (2) sequentially adding to said living polymer at least one second monomer to copolymerize with said first polymer to produce a multiblock polymer; and
    (3) recovering the block copolymer.

2. Process of claim 1 wherein the block copolymer is a diblock copolymer or triblock copolymer.

3. Process according to claim 1 wherein the non-coordinating anion is derived from a single coordination complex comprising a plurality of lipophilic radicals covalently coordinated to and shielding a central formally charge bearing metal or metalloid atom or comprises a plurality of boron atoms, which anion is bulky and stable during polymerization.

4. The process of claim 1 wherein the catalyst reaction product is of the formula:

$$[A\text{-}CpMX_1(L')][B(C_6F_5)_3(X_3)]$$

wherein: M is titanium, zirconium or hafnium; (A-Cp) is either (Cp) (Cp*) or Cp-A'-Cp* and Cp and Cp* are the same or different substituted or unsubstituted cyclopentadienyl radicals; A' is a covalent bridging group containing a Group IV-A element; L' is neutral Lewis base; B is boron; $X_1$ is a hydride radical, hydrocarbyl radical having from 1 to 20 carbon atoms, substituted-hydrocarbyl radical having from 1 to 20 carbon atoms, wherein 1 or more of the hydrogen atoms are replaced with a halogen atoms, or organo-metalloid radical comprising a Group IV-A element

wherein each of the hydrocarbyl substitutents contained in the organo portion of said organo-metalloid, independently, contain from 1 to 20 carbon atoms; and $X_3$ is a hydride, halide, hydrocarbyl radical, a $C_1$-$C_{20}$ hydrocarbyl radical wherein one or more of the hydrogen atoms is replaced by a halogen atom, organometalloid radical wherein each hydrocarbyl substitution in the organo portion contains from 1 to 20 carbon atoms and the metal is a Group IV-A metal.

**5.** The process of claim 1, wherein the catalyst is the reaction product bis(cyclopentadienyll) hafnium dimethyl and N, N-dimethylanilinium tetrakis(pentafluorophenyl)boron.

**6.** The process of claim 1 wherein said steps of reacting, copolymerizing, introducing and repeating are carried out at a temperature of from -5°C to 10°C preferably -5 to 0°C.

**7.** The process of claim 1 wherein any of said monomers is selected from ethylene, propylene, 1-butene.

**8.** The process of claim 1 wherein tapered blocks in the block copolymers are produced by the addition of stoichoimetric amounts of a mixture of at least two olefins having generally different reactivities with the catalyst.

**9.** The process of claim 1 wherein the block copolymers have a molecular weight distribution of 1.1 to 2.0.

## Patentansprüche

**1.** Verfahren zur Herstellung eines Blockcopolymers, bei dem

(1) mindestens ein erstes olefinisches Monomer mit einem Katalysator kontaktiert wird, der

(a) ein Gruppe-IVB-Metallocen-Kation mit einer formalen Koordinationszahl von 3 und einer Wertigkeit von +4 und
(b) ein nicht koordinierendes Anion umfaßt, das raumerfüllend ist, das Kation oder ein Zersetzungsprodukt stabilisieren kann und ausreichend labil ist, um die Verdrängung durch ein Olefin, Diolefin oder acetylenisch ungesättigte Monomere zuzulassen, um ein erstes lebendes Polymer zu erzeugen,

(2) dem lebenden Polymer in aufeinanderfolgender Weise mindestens ein zweites Monomer zugegeben wird, um mit dem ersten Polymer zu copolymerisieren, um ein Multiblockpolymer zu erzeugen, und
(3) das Blockcopolymer gewonnen wird.

**2.** Verfahren nach Anspruch 1, bei dem das Blockcopolymer ein Diblockcopolymer oder Triblockcopolymer ist.

**3.** Verfahren nach Anspruch 1, bei dem das nicht koordinierende Anion von einem einzigen Koordinationskomplex mit mehreren lipophilen Resten abgeleitet ist, die kovalent um ein zentrales, Formalladung tragendes Metall- oder Metalloidatom koordiniert sind und dieses abschirmen, oder mehrere Boratome umfaßt, wobei das Anion raumerfüllend und während der Polymerisation stabil ist.

**4.** Verfahren nach Anspruch 1, bei dem das Katalysatorreaktionsprodukt die Formel

$$[A\text{-}CpMX_1(L')][B(C_6F_5)_3(X_3)]$$

hat, wobei M Titan, Zirconium oder Hafnium ist; (A-Cp) entweder (Cp)(Cp*) oder Cp-A'-Cp* ist und Cp und Cp* die gleichen oder unterschiedliche substituierte oder unsubstituierte Cyclopentadienylreste sind; A' eine kovalente Brückengruppe ist, die ein Gruppe-IV-A-Element enthält; L' eine neutrale Lewisbase ist; B Bor ist; $X_1$ ein Hydridrest, Kohlenwasserstoffrest mit 1 bis 20 Kohlenstoffatomen, substituierter Kohlenwasserstoffrest mit 1 bis 20 Kohlenstoffatomen, bei dem 1 oder mehrere der Wasserstoffatome durch Halogenatome ersetzt sind, oder Organometalloidrest ist, der ein Gruppe-IV-A-Element umfaßt, wobei jeder der in dem Organoanteil des Organometalloids enthaltenen Kohlenwasserstoffsubstituenten unabhängig 1 bis 20 Kohlenstoffatome enthält; und $X_3$ ein Hydrid, Halogenid, Kohlenwasserstoffrest, ein $C_1$- bis $C_{20}$-Kohlenwasserstoffrest, bei dem ein oder mehrere der Wasserstoffatome durch ein Halogenatom ersetzt sind, oder Organometalloidrest ist, bei dem jeder Kohlenwasserstoffsubstituent in dem Organoanteil 1 bis 20 Kohlenstoffatome enthält und das Metall ein Gruppe-IV-A-Metall ist.

5. Verfahren nach Anspruch 1, bei dem der Katalysator das Reaktionsprodukt von Bis(cyclopentadienyl)hafniumdimethyl und N,N-Dimethylanilinium-tetrakis(pentafluorphenyl)bor ist.

6. Verfahren nach Anspruch 1, bei dem die Stufen des Umsetzens, Copolymerisierens, Einbringens und Wiederholens bei einer Temperatur von -5°C bis +10°C, vorzugsweise -5°C bis 0°C durchgeführt werden.

7. Verfahren nach Anspruch 1, bei dem jedes der Monomere ausgewählt ist aus Ethylen, Propylen und 1-Buten.

8. Verfahren nach Anspruch 1, bei dem durch Zugabe von stöchiometrischen Mengen einer Mischung aus mindestens zwei Olefinen mit allgemein unterschiedlichen Reaktivitäten mit dem Katalysator Gradientenblöcke in den Blockcopolymeren erzeugt werden.

9. Verfahren nach Anspruch 1, bei dem die Blockcopolymere eine Molekulargewichtsverteilung von 1,1 bis 2,0 aufweisen.

**Revendications**

1. Procédé pour la production d'un copolymère séquencé, comprenant les étapes consistant :

(1) à mettre en contact au moins un premier monomère oléfinique avec un catalyseur comprenant :

(a) un cation de métallocène du Groupe IVB ayant un indice de coordination formel égal à 3 et une valence égale à +4, et
(b) un anion non coordinant qui est volumineux, capable de stabiliser le cation ou un produit de décomposition et suffisamment labile pour permettre le déplacement par une oléfine, une dioléfine ou des monomères à insaturation acétylénique pour produire un premier polymère vivant,

(2) à ajouter successivement audit polymère vivant au moins un second monomère pour la copolymérisation avec ledit premier polymère afin de produire un polymère à blocs multiples ; et
(3) à recueillir le copolymère séquencé.

2. Procédé suivant la revendication 1, dans lequel le copolymère séquencé est un copolymère à deux blocs ou un copolymère à trois blocs.

3. Procédé suivant la revendication 1, dans lequel l'anion non coordinant est dérivé d'un complexe de coordination simple comprenant une pluralité de radicaux lipophiles en coordination covalente avec, et faisant écran à, un atome de métal ou métalloïde central formellement porteur de charge, ou bien comprend une pluralité d'atomes de bore, anion qui est volumineux et stable au cours de la polymérisation.

4. Procédé suivant la revendication 1, dans lequel le produit de réaction servant de catalyseur répond à la formule :

$$[A\text{-}CpMX_1(L')][B(C_6F_5)_3(X_3)]$$

dans laquelle : M représente le titane, le zirconium ou l'hafnium ; (A-Cp) représente un groupe (Cp)(Cp*) ou Cp-A'-Cp* et Cp et Cp* représentent des radicaux cyclopentadiényle identiques ou différents, substitués ou non substitués ; A' représente un groupe covalent de pontage contenant un élément du Groupe IV-A ; L' représente une base neutre de Lewis ; B représente le bore ; $X_1$ représente un radical hydrure, un radical hydrocarbyle ayant 1 à 20 atomes de carbone, un radical hydrocarbyle de 1 à 20 atomes de carbone substitué, dans lequel un ou plusieurs des atomes d'hydrogène sont remplacés par des atomes d'halogènes, ou un radical organométalloïdique comprenant un élément du Groupe IV-A, chacun des substituants hydrocarbyle présents dans la portion organique dudit organométalloïde contenant, indépendamment, 1 à 20 atomes de carbone ; et $X_3$ représente un radical hydrure, un radical halogénure, un radical hydrocarbyle, un radical hydrocarbyle en $C_1$ à $C_{20}$ dans lequel un ou plusieurs des atomes d'hydrogène sont remplacés par un atome d'halogène, un radical organométalloïdique dans lequel chaque substituant hydrocarbyle dans la portion organique contient 1 à 20 atomes de carbone et le métal est un métal du Groupe IV-A.

**5.** Procédé suivant la revendication 1, dans lequel le catalyseur est le produit de réaction de bis(cyclopentadiényl) hafnium-diméthyle et le N,N-diméthylaniliniumtétrakis (pentafluorophényl)bore.

**6.** Procédé suivant la revendication 1, dans lequel les étapes de réaction, de copolymérisation, d'introduction et de répétition sont mises en oeuvre à une température comprise dans l'intervalle de -5°C à 10°C, de préférence de -5°C à 0°C.

**7.** Procédé suivant la revendication 1, dans lequel n'importe lequel des monomères est choisi entre l'éthylène, le propylène et le 1-butène.

**8.** Procédé suivant la revendication 1, dans lequel des blocs progressifs dans les copolymères séquencés sont produits par addition de quantités stoechiométriques d'un mélange d'au moins deux oléfines ayant généralement des réactivités différentes avec le catalyseur.

**9.** Procédé suivant la revendication 1, dans lequel les copolymères séquencés ont une distribution des poids moléculaires de 1,1 à 2,0.